# FASCICULE DE BREVET EUROPEEN

(11) **EP 1 616 767 B1**
(45) Date de publication et mention de la délivrance du brevet: **25.07.2007**
(21) Numéro de dépôt: 05014857.6
(22) Date de dépôt: 08.07.2005
(51) Int. Cl.: B60T 11/10

(54) **Maître-cylindre à dispositif de réaction hydraulique et ensemble de freinage comportant un tel maître-cylindre**
Hauptzylinder mit einem hydraulischen Reaktionsvorrichtung und Bremssystem mit einem derartigen Hauptzylinder
Master cylinder having a hydraulical reactiondevice and brake system having such a master cylinder

(30) Priorité: 13.07.2004 FR 0407954
(43) Date de publication de la demande: 18.01.2006
(73) Titulaire: ROBERT BOSCH GMBH, 70442 Stuttgart (DE)
(72) Inventeur: Attard, Jean-Marc, 60340 Villers Sous St. Leu (FR); Lacroix, Stéphane, 77220 Tournan en Brie (FR)
(74) Mandataire: Hurwic, Aleksander Wiktor

(56) Documents cités:
- WO-A-03/099623
- US-A- 6 085 522
- US-B1- 6 209 441

## Description

La présente invention se rapporte principalement à maître-cylindre à dispositif de réaction hydraulique et un ensemble de freinage comportant un tel maître-cylindre.

Un système de freinage de type connu comporte un maître-cylindre raccordé de manière hydraulique à des freins disposés au niveau des roues et commandé par une pédale de frein actionnée par le conducteur. De manière usuelle, le système de freinage comporte un servomoteur d'assistance au freinage interposé entre le maître-cylindre et la pédale de frein de manière à amplifier l'effort appliqué sur la pédale par le conducteur.
Afin de retransmettre une réaction au conducteur par l'intermédiaire de la pédale, lui permettant ainsi de doser l'effort à appliquer en fonction du freinage souhaité, le système de freinage comporte un dispositif dit de réaction. Le plus connu et le plus utilisé de ces dispositifs est disposé dans les servomoteurs et est appelé à disque de réaction, il comporte un disque en caoutchouc sensiblement indéformable composant les efforts appliqués par la tige de commande, le servomoteur et le circuit hydraulique de freinage. Ce dispositif a comme avantage d'être efficace, sûr et d'un faible coût de revient. De plus, le saut du système de freinage est facilement obtenu en créant un jeu au repos entre l'extrémité d'un palpeur formant l'extrémité de la tige de commande et une face du disque de réaction.
Il est également connu un dispositif de réaction dit hydraulique disposé dans un piston primaire du maître-cylindre, ayant pour avantage d'offrir une réaction de très grande sensibilité et d'être de faible encombrement. Cependant ce dispositif est de construction complexe et est donc d'un prix de revient élevé.
Il est également dé plus, de plus en plus fréquent d'équiper les systèmes de freinage de dispositif d'assistance au freinage permettant de faciliter l'accroissement du niveau de freinage. La mise en place de ce type de dispositif est complexe dans un servomoteur à disque de réaction et est très encombrant, tandis qu'il s'intègre de manière relativement aisé avec un faible encombrement dans un maître-cylindre pourvu d'un dispositif à réaction hydraulique, cependant la réalisation reste complexe et nécessite beaucoup de soin.

Il est connu du document WO 03/099623 un maître-cylindre à dispositif de réaction hydraulique comportant un dispositif d'assistance au freinage. Le dispositif de réaction comporte un piston de réaction monté à coulissement étanche dans un piston primaire du maître-cylindre et un piston de rapport sous forme de douille montée à coulissement étanche entre le piston primaire et le piston de réaction. Un ressort cylindrique est monté en réaction entre un premier épaulement pratiqué sur le piston de réaction et une rondelle annulaire en appui contre un deuxième épaulement, ladite rondelle étant apte à coulisser dans le sens opposé au sens d'actionnement. Au delà d'un certain seuil de pression, régnant dans la chambre de travail du maître-cylindre, le piston de rapport vient en appui contre la rondelle dans le sens opposé d'actionnement et au delà d'un second seuil de pression, le piston de rapport se déplace avec la rondelle à l'encontre du ressort, augmentant ainsi le rapport d'assistance du système de freinage.
Cependant ce dispositif ne procure pas de phase de saut en début de freinage, c'est-à-dire, une phase d'augmentation de pression dans le maître-cylindre sans augmentation de l'effort fourni à la pédale. Cette phase ou caractéristique est très recherchée par les constructeurs offrant une sensation de réactivité ou de « mordant » au véhicule.

C'est par conséquent un but de la présente invention d'offrir un maître-cylindre offrant à la fois une transmission de la réaction du système de freinage de grande qualité et un dispositif d'assistance au freinage.

C'est également un but de la présente invention d'offrir un maître-cylindre de conception simple.

C'est également un but de la présente invention d'offrir un maître-cylindre de prix de revient faible.

C'est également un but de la présente invention d'offrir un ensemble maître-cylindre et servomoteur selon la présente invention à faible course morte.

Les buts précédemment énoncés sont atteints grâce à un maître-cylindre comportant un dispositif de réaction hydraulique comprenant un piston de réaction, entouré par un piston de rapport, le piston de réaction étant immobile par rapport à une tige de commande du système de freinage par un moyen élastique dans une première phase de freinage.

En d'autres termes, pour une pression régnant dans le système de freinage inférieure à un seuil déterminé, aucune réaction n'est transmise à la tige de commande et pour une pression supérieure à ce seuil, le piston de réaction se déplace en direction de la tige de commande et transmet la réaction à la tige de commande.

La présente invention a principalement pour objet un maître-cylindre pour système de freinage, selon la revendication 1.

La présente invention a également pour objet un maître-cylindre caractérisé en ce que les dits moyens aptes à créer un saut comportent un deuxième moyen élastique monté en réaction entre le piston primaire et le piston de réaction.

La présente invention a également pour objet un maître-cylindre caractérisé en ce que le piston de rapport est en appui contre le piston de réaction au repos dans la direction d'actionnement du piston primaire.

La présente invention a également pour objet un maître-cylindre caractérisé en ce que le piston de rapport est en appui contre une cloison transversale divisant l'alésage en une première et deuxième chambre, en ce que la deuxième chambre est en communication avec la chambre de travail du maître-cylindre, en ce que ladite cloison comporte des moyens pour mettre en communication la première et la deuxième chambre, en ce que le piston de rapport est au repos en appui contre ladite cloison et en ce que la cloison comporte du côté de la première chambre une cavité de réception de manière étanche de l'extrémité avant du piston de réaction, ladite extrémité du piston de réaction étant apte à coulisser dans ladite cavité, de manière à isoler ladite extrémité des variations de pression dans le maître-cylindré.

La présente invention a également pour objet un maître-cylindre caractérisé l'étanchéité de coulissement de la première extrémité avant du piston de réaction est réalisée au moyen d'un joint torique monté dans une gorge pratiqué dans la périphérie du piston de réaction

La présente invention a également pour objet un maître-cylindre caractérisé en ce que le premier moyen élastique est monté en réaction entre le piston de réaction et le piston de rapport.

La présente invention a également pour objet un maître-cylindre caractérisé en ce que le deuxième moyen élastique est en appui contre le piston de réaction par l'intermédiaire du piston de rapport.

La présente invention a également pour objet un maître-cylindre caractérisé en ce que le premier et le deuxième moyens élastiques sont respectivement en appui contre le piston de rapport par l'intermédiaire d'une bague montée à coulissement autour du piston de réaction.

La présente invention a également pour objet un maître-cylindre caractérisé en ce que le piston de rapport vient en appui contre le piston primaire dans le sens opposé au sens d'actionnement du piston primaire lorsque le seuil de changement de rapport a été atteint.

La présente invention a également pour objet un maître-cylindre caractérisé en ce que le seuil de changement de rapport est atteint lorsque la pression dans la chambre de travail est suffisant pour contrer l'effort appliqué par le moyen élastique de rapport.

La présente invention a également pour objet un maître-cylindre caractérisé en ce que le premier et le deuxième moyens élastiques sont des ressort à spirales.

La présente invention a également pour objet un ensemble servomoteur d'assistance pneumatique au freinage et maître-cylindre, ledit servomoteur comportant une enveloppe dans laquelle coulisse une jupe solidaire d'un piston pneumatique et délimitant une chambre à basse pression et une chambre à pression variable, une valve trois voies montée dans le piston pneumatique et actionnée par une tige commande caractérisé en ce que le maître-cylindre est un maître-cylindre selon la présente invention, en ce que le piston pneumatique est en appui contre une extrémité arrière du piston primaire et en ce que le piston de réaction est apte à venir en contact d'un distributeur-plongeur disposé à une extrémité de la tige de commande lors de la phase de saut.

La présente invention a également pour objet un ensemble servomoteur d'assistance pneumatique au freinage et maître-cylindre caractérisé en ce que la valve trois voies comporte une douille montée à coulissement dans un passage central du piston pneumatique, et postant un siège d'équilibrage, un siège d'alimentation étant portée par le distributeur-plongeur et en ce que le servomoteur comporte des moyens permettant de solidariser la douille au piston pneumatique au delà d'une course prédéterminée.

La présente invention sera mieux comprise à l'aide de la description qui suit et des dessins fournis en annexe, et pour lesquels l'avant et l'arrière sont respectivement la gauche et la droite et sur lesquels .
- La figure 1a est une vue en coupe longitudinale schématique de détail d'un premier mode de réalisation d'un maître-cylindre selon la présente invention ;
- La figure 1b est une courbe schématique de l'évolution du rapport entre la pression dans le maître-cylindre et l'effort appliqué à la pédale de frein pour un système de freinage selon la présente invention ;
- La figure 2a est une vue en coupe longitudinale schématique de détail d'un deuxième mode de réalisation d'un maître-cylindre selon la présente invention ;
- La figure 2b est une courbe schématique de l'évolution du rapport entre la pression dans le maître-cylindre et l'effort appliqué à la pédale de frein pour le deuxième mode de réalisation représenté sur la figure 2a ;
- La figure 3 est une vue en coupe longitudinale d'un troisième mode de réalisation d'un maître-cylindre selon la présente invention au repos ;
- La figure 4 est une vue du maître-cylindre de la figure 3 dans une deuxième phase de fonctionnement ;
- La figure 5 est une vue du maître-cylindre de la figure 3 dans une troisième phase de fonctionnement ;
- La figure 6 est une vue en coupe longitudinale d'un ensemble servomoteur et maître-cylindre selon la présente invention.

Les mêmes références seront utilisées pour désigner les éléments ayant les mêmes fonctions.

Sur la figure la, on peut voir un premier mode de réalisation d'un maître-cylindre 1 selon la présente invention comportant un corps 2 de forme sensiblement cylindrique et d'axe longitudinal X, dans lequel est pratiqué un alésage 4 également d'axe X . Le maître-cylindre comporte également au moins un piston primaire 5 monté à coulissement étanche dans l'alésage 4 et commandé par une tige de commande manoeuvrable par une pédale de frein (non représentées), et délimitant une chambre de travail (non représentée) et une chambre d'alimentation (non représentée) raccordée à un réservoir de liquide de frein (non représenté). De manière usuelle, le maître-cylindre comporte un piston primaire et un piston secondaire. Nous nous limiterons à la description du piston primaire, le piston apte à transmettre au conducteur par l'intermédiaire de la tige de commande la pression régnant dans le circuit de freinage et permettant ainsi au conducteur d'adapter son effort sur la pédale de frein. Le dispositif de réaction comporte un piston de réaction 6 monté à coulissement de manière étanche dans un alésage 8 longitudinal traversant le piston primaire 5. Le piston de réaction comporte une première extrémité avant 10 soumise à la pression régnant dans la chambre de travail et une deuxième extrémité arrière 12 susceptible de venir en contact avec un palpeur 14 solidaire avec une extrémité avant (non représentée) de la tige de commande. Dans le mode de réalisation représenté, de manière avantageuse au repos un jeu s prédéterminé existe entre l'extrémité arrière 12 du piston de réaction et le palpeur, améliorant la sensation pédale. Cependant, dans le cadre de la présente invention, on pourrait prévoir un contact permanent entre le palpeur et l'extrémité arrière du piston de réaction.

L'alésage 8 est composé dans le sens d'actionnement indiqué par la flèche F, d'une première partie 7 de plus grand diamètre, d'une deuxième partie 9 de plus petit diamètre et d'une troisième partie 11 de diamètre intermédiaire. Les première, deuxième et troisième parties 7,9,11 se raccordent par des première 32 et deuxième 34 portées annulaires respectivement orientées dans le sens d'actionnement.

Le jeu s est fixé au repos au moyen d'un moyen élastique 18 , par exemple un ressort cylindrique appelé ressort de saut en appui par une extrémité arrière contre le piston primaire et par une extrémité avant contre le piston de réaction. Dans l'exemple représenté, une rondelle 16 montée solidaire du piston primaire 5, forme l'appui pour le ressort de saut, par exemple la rondelle 16 est montée à force dans l'alésage 4.

Le piston de réaction est de forme étagée comportant une première partie arrière de plus petit diamètre 20, une deuxième partie de diamètre intermédiaire 22 et une troisième partie de plus grand diamètre 24, la première partie 20 se raccordant à la deuxième partie 22 par un premier épaulement 26 et la deuxième partie 22 se raccordant à la troisième partie 24 par un deuxième épaulement 28.

Le ressort de saut 18 est en appui dans l'exemple représenté par son extrémité avant contre le premier épaulement 26 par l'intermédiaire d'une rondelle 30 montée à coulissement sur le piston de réaction. Au repos, la rondelle est également en appui par une extrémité radialement externe contre la première portée 32 de l'alésage 8 du piston primaire.
Au delà d'une pression prédéterminée régnant dans la chambre de travail du maître-cylindre que nous appellerons premier seuil S1 et fixée par la charge du ressort de saut 18, le piston de réaction se déplace vers l'arrière pour venir en contact du palpeur et ainsi transmettre une réaction au conducteur.

Le maître-cylindre selon la présente invention comporte également un dispositif d'assistance au freinage DA permettant au delà d'un deuxième seuil prédéterminé S2, d'augmenter le rapport d'assistance du système de freinage. Le dispositif DA comporte un piston de rapport 36 en forme de douille, monté à coulissement étanche autour de la deuxième partie 22 du piston de réaction 6 et dans l'alésage du piston primaire. Les étanchéités des coulissements sont réalisées dans l'exemple représenté par un premier et un deuxième joints toriques 38,40 montés dans des première et deuxième gorges 42,44 pratiqués sur une périphérie intérieure 46 et extérieure 48 de la douille 36. Il est bien entendu que les joints peuvent être portés par le piston primaire et le piston de réaction, et que les joints peuvent être des joints quadrilobes ou des joints à lèvre par exemple. La douille 36 est maintenue au repos en appui par une extrémité arrière contre le deuxième épaulement 28 du piston de réaction par un deuxième moyen élastique 50 monté en réaction entre une extrémité arrière de la douille et le piston de réaction et maintenant au repos une extrémité arrière 53 de la douille à un jeu axial x1 de la portée 34 du piston primaire. Ainsi en dessous du deuxième seuil de pression S2, le piston de réaction et le piston de rapport se déplacent de manière solidaire, la section transversale du piston de rapport participe alors à la transmission de la réaction à l'organe de commande. Dans l'exemple représenté, le piston de réaction comporte une saillie radiale 52 formant l'appui pour le deuxième moyen élastique 50, il s'agit par exemple d'un circlips monté dans une gorge pratiquée dans la périphérie du piston de réaction.

La douille 36 est donc apte à se déplacer entre le deuxième épaulement 28 du piston de réaction et la deuxième portée annulaire 34 du piston primaire 5.

Le piston primaire 5 est en appui par une extrémité arrière 58 contre un piston pneumatique 108 d'un servomoteur, le piston pneumatique 108 comportant un passage central 118 pour le palpeur. Nous ne décrirons par le servomoteur pneumatique d'assistance au freinage classique, dispositif bien connu de l'homme du métier.

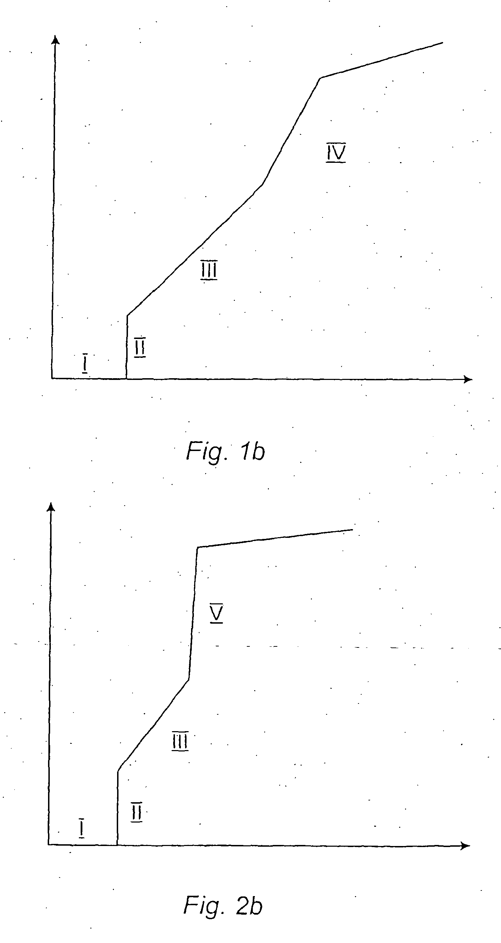

Nous allons maintenant décrire le fonctionnement du maître-cylindre selon la présente invention à l'aide de la courbe représentée sur la figure 1b.
Lors de la phase I, le conducteur commence à appuyer sur la pédale de frein déplaçant la tige de commande dans le sens de la flèche F, rattrapant les courses mortes du servomoteur et du maître-cylindre, cependant aucune réaction n'est transmise à la tige de commande.
Lors de la phase II, dite phase de saut, lorsque la pression dans le maître-cylindre atteint le premier seuil S1, le piston de réaction ainsi que le piston de rapport 36 coulissent alors dans le sens contraire de la flèche à l'encontre du ressort de saut 18. L'extrémité arrière du piston de réaction vient en contact avec le palpeur, transmettant ainsi une réaction à la tige de commande.
Lors de la phase III, le conducteur continue à accroître l'effort appliqué à la pédale de frein, la pression dans le maître-cylindre continue à croître selon une fonction linéaire de l'effort à la pédale de frein.
Lors de la phase IV, au delà du deuxième seuil SII de pression dans le maître-cylindre, le piston de rapport 36 coulisse dans le sens contraire à celui de la flèche à l'encontre du ressort de rapport 50. Lorsque la douille a parcouru le jeu x1, l'extrémité 53 de la douille 36 vient en contact de la deuxième portée annulaire 34. La douille est alors solidaire du piston primaire, la section transversale du piston de réaction est alors réduite, provoquant alors une augmentation du rapport d'assistance.

Sur la figure 2a, on peut voir un deuxième mode de réalisation permettant d'annuler complètement l'effort de réaction transmis à la tige de commande au delà d'un certaine effort d'entrée appliqué à la tige de commande.
Le piston primaire 5 comporte une cloison transversale 200 divisant l'alésage 8 en une première chambre 202 recevant un dispositif de réaction DA' et une deuxième chambre 204 formant la chambre de travail. La cloison 200 comporte des moyens de communication 205 permettant de transmettre la pression du liquide de frein dans la première et dans la deuxième chambre. Dans l'exemple représenté, il s'agit de canaux axiaux 205.
Dans ce deuxième mode de réalisation, le piston de réaction ne comporte pas de troisième partie de plus grand diamètre. Une face 208 de la cloison 200 du côté de la première chambre 202 comporte une cavité 209 recevant de manière étanche l'extrémité avant 10 du piston de réaction de manière à isoler l'extrémité avant du piston de réaction de la pression de liquide de frein régnant dans le maître-cylindre. Par conséquent, la pression de liquide de frein s'applique uniquement au piston de réaction par l'intermédiaire du piston de rapport 36.
Un moyen d'étanchéité, dans l'exemple représenté un joint torique 210, est monté dans une gorge 212 pratiquée dans l'extrémité avant 10 du piston de réaction. Il est bien entendu que le joint pourrait être monté dans une gorge pratiquée dans une paroi de la cavité.

Dans ce mode de réalisation, le piston de rapport 36 comporte avantageusement une première partie arrière 214 de grand diamètre sensiblement égale au diamètre intérieure de la troisième partie 11 de l'alésage 4 coulissant de manière étanche dans l'alésage 8, et une deuxième partie avant 216 de petit diamètre et venant en butée au repos contre la cloison 200. Le diamètre de la deuxième partie est choisi de manière à ne pas recouvrir entièrement l'extrémité des canaux 205, évitant un risque de collage du piston de rapport contre la cloison 200. Il est également envisageable de prévoir une saillie annulaire sur le piston de réaction et formant butée avant pour le piston de rapport.

L'extrémité arrière 53 du piston de rapport 36 est maintenu écartée par le ressort 50 a un jeu x2 de la portée 34 du piston primaire.

Nous allons maintenant expliquer le fonctionnement de ce maître-cylindre selon le deuxième mode de réalisation en relation avec la figure 2b décrivant l'évolution de la pression dans le maître-cylindre en fonction de l'effort appliquée à la tige de commande.
Lors de la phase I, le conducteur commence à appuyer sur la pédale de frein déplaçant la tige de commande dans le sens de la flèche, rattrapant les courses mortes du servomoteur et du maître-cylindre, cependant aucune réaction n'est transmise à la tige de commande.
Lors de la phase II, dite phase de saut, lorsque la pression dans le maître-cylindre atteint le premier seuil SI, le piston de réaction et le piston de rapport coulissent alors dans le sens contraire de la flèche à l'encontre du ressort de saut 18, le piston de réaction vient en contact avec le palpeur. Le piston de réaction et le piston de rapport transmettent ainsi une réaction à la tige de commande.
Lors de la phase III, le conducteur continue à accroître l'effort appliqué à la pédale de frein, la pression dans le maître-cylindre continue à croître selon une fonction linéaire de l'effort à la pédale de frein.
Lors de la phase V, au delà du deuxième seuil SII de pression dans le maître-cylindre, le piston de rapport 36 coulisse dans le sens contraire à celui de la flèche à l'encontre du ressort de rapport 50, jusqu'à ce que la douille est parcourue le jeu x2 et l'extrémité arrière 53 de la douille 36 vienne en contact de la deuxième portée annulaire 34. La douille devient solidaire du piston primaire. Le piston de réaction n'est alors plus soumis à la pression régnant dans le maître-cylindre du fait de l'isolement de l'extrémité avant 10 du piston de réaction du liquide de frein sous pression. Par conséquent aucune réaction hydraulique est transmise à la tige de commande.

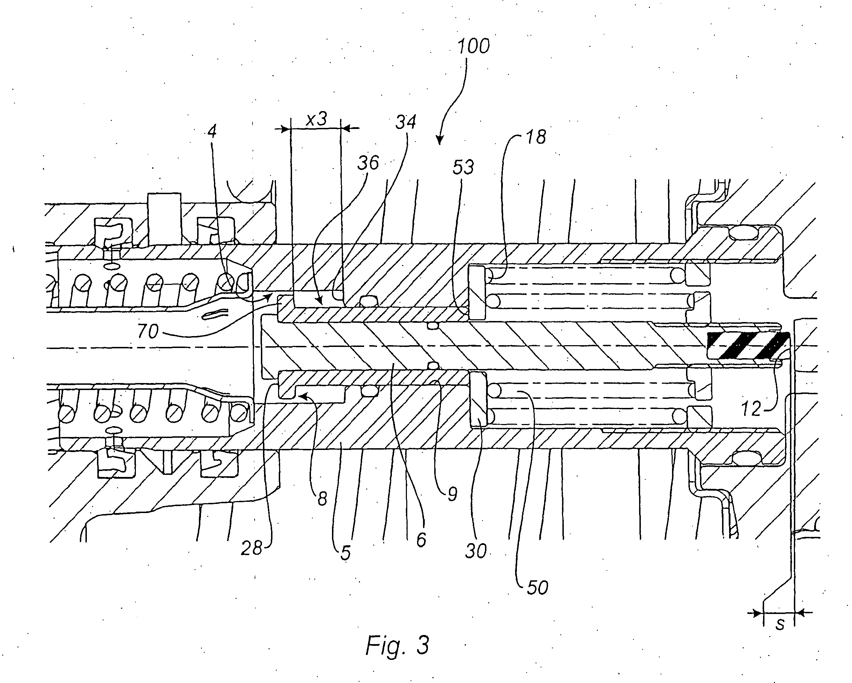

Sur les figures 3 à 6, on peut voir un troisième mode de réalisation d'un maître-cylindre 100 de conception très simple et très compacte.

Dans ce troisième mode de réalisation, le piston de rapport 36 ou douille est monté à coulissement dans la deuxième partie de plus petit diamètre 9 de l'alésage 8 du piston primaire de manière à être guidé axialement par la deuxième partie 9. Le ressort de saut 18 et le ressort de rapport 50 sont tous deux montés en appui par une extrémité avant contre la rondelle 30, qui est elle même en appui non plus contre un épaulement du piston de réaction mais contre une extrémité arrière 53 de la douille 36. Par conséquent, le ressort de saut 18 est en appui de manière indirecte contre le piston de réaction 6 par l'intermédiaire de la douille 36, qui est elle même en appui contre le deuxième épaulement 28 du piston de réaction, maintenant ainsi le jeu s entre le palpeur et l'extrémité arrière 12 du piston de réaction. Dans ce second mode réalisation, le ressort de rapport 50 est monté à l'intérieur du ressort de saut 18, permettant ainsi un gain de place dans le sens axial. De plus, le fait que le ressort de saut 18 exerce un effort sur la douille dans le sens de la flèche implique que le ressort de saut participe à la détermination du deuxième seuil SII, permettant ainsi de réduire la charge du ressort de rapport, et par la même sa taille et donc son encombrement. Par conséquent, le ressort de saut a également comme fonction le changement du rapport d'assistance du système de freinage.

La douille comporte à son extrémité avant une embase 70 destinée à venir en contact de la portée annulaire 34 au delà du seuil S2. Les ressorts 18 et 50 maintiennent l'embase 70 écarté de la portée 34 d'un jeu axial x3.

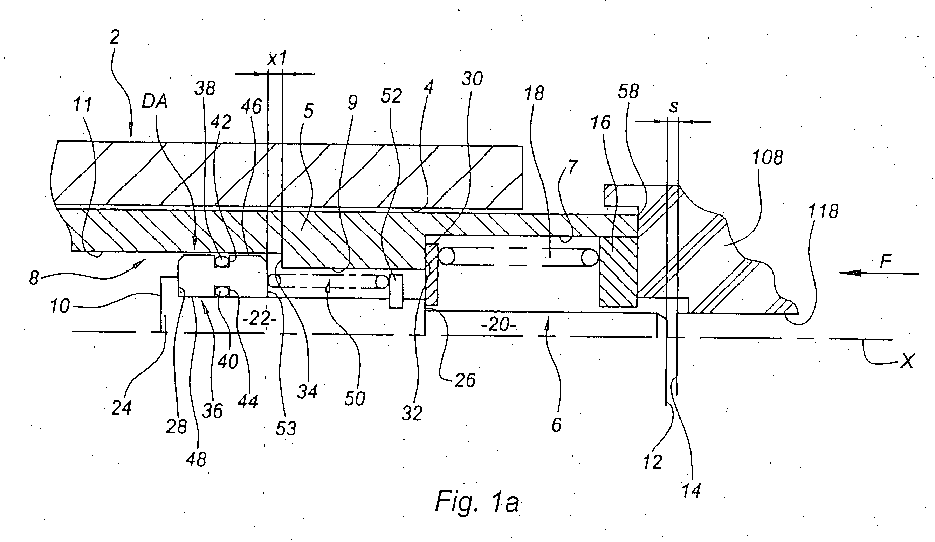

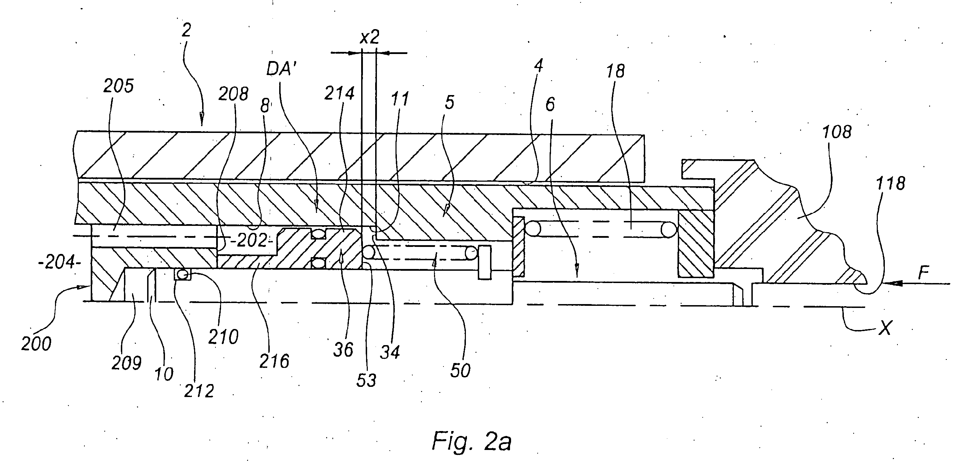

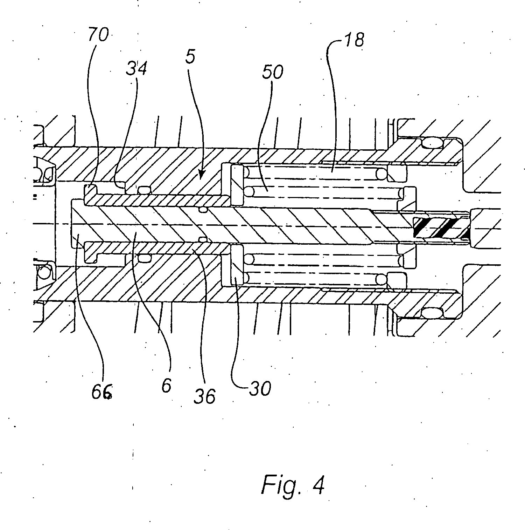

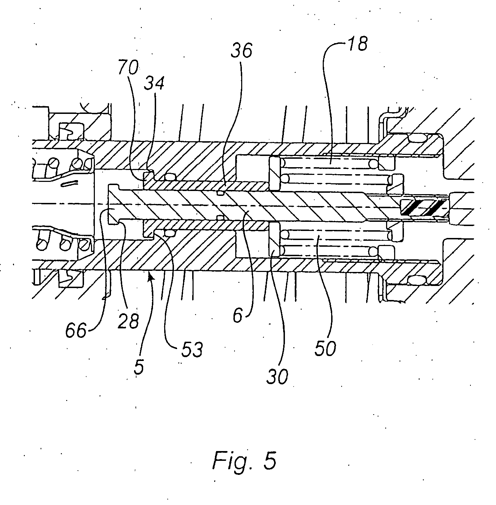

Nous allons maintenant expliquer le fonctionnement du maître-cylindre selon le deuxième mode de réalisation en utilisant également la figure 1a.
Lors de la phase I, le conducteur commence à appuyer sur la pédale de frein déplaçant la tige de commande dans le sens de la flèche, rattrapant les courses mortes du servomoteur et du maître-cylindre, cependant aucune pression dans le maître-cylindre n'apparaît..
Lors de la phase II, (figure 4) dite phase de saut, lorsque la pression dans le maître-cylindre atteint le premier seuil SI, le piston de réaction 6 ainsi que le piston de rapport 36 coulissent dans le sens contraire de la flèche à l'encontre du ressort de saut 18, l'extrémité arrière 12 du piston de réaction vient alors en contact avec le palpeur, transmettant ainsi une réaction au conducteur.
Lors de la phase III, le conducteur continue à accroître l'effort appliqué à la pédale de frein, la pression dans le maître-cylindre continue à croître selon une fonction linéaire de l'effort à la pédale de frein.
Lors de la phase IV, (figure 5) au delà du deuxième seuil SII de pression dans le maître-cylindre, le piston de rapport 36 coulisse dans le sens contraire à celui de la flèche à l'encontre du ressort de saut 18 et du ressort de rapport 50. Lorsqu'il a parcouru le jeu x3, l'embase 70 vient en contact de la portée 34, provoquant alors une augmentation du rapport d'assistance.

Ce mode de réalisation a pour avantage d'utiliser à la fois le ressort de saut et le ressort de rapport pour fixer le deuxième seuil SII, permettant ainsi de réduire la charge utile du ressort de rapport et ainsi de réduire sa taille et son encombrement.

La présente invention est particulièrement intéressante associé à une servomoteur dit à course morte masquée, dans lequel le la jupe et le piston pneumatique sont dissocié de la valve pneumatique sur une certaine course en début de freinage. Ainsi en début de freinage, le déplacement de la jupe et du piston pneumatique provoque, un déplacement du piston primaire, provoquant un rattrapage des courses mortes du maître-cylindre et du circuit de freinage sans que le conducteur ne s'en aperçoive. Ce type de servomoteur est largement décrit dans le document FR0307572.

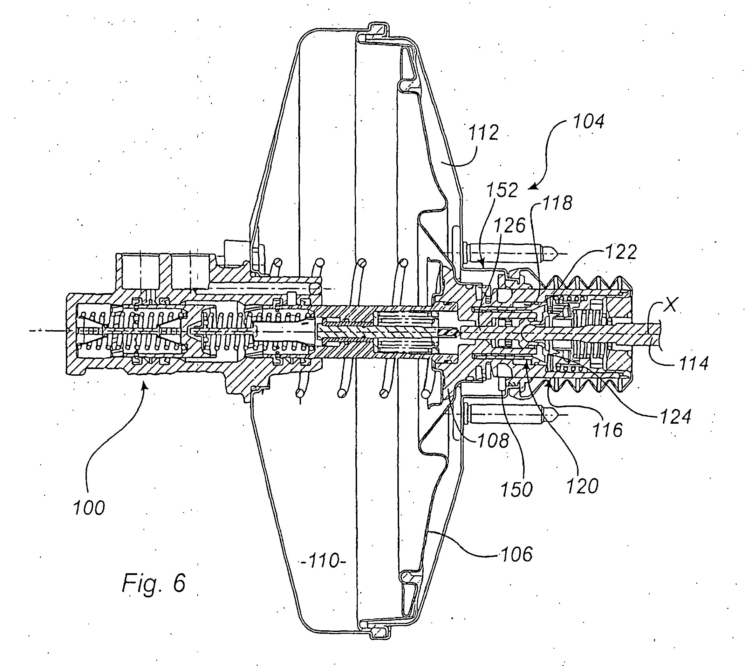

Sur la figure 6, on peut voir un tel ensemble maître-cylindre et servomoteur selon a présente invention dans lequel le servomoteur est du type à course morte masquée. Ledit ensemble comporte un maître-cylindre 100 selon la présente invention, un servomoteur 104. Le servomoteur comporte une enveloppe dans laquelle est montée à coulissement étanche une jupe 106 solidaire d'un piston pneumatique 108. La jupe divise le volume intérieur de l'enveloppe en une chambre à basse pression 110 et une chambre à pression variable 112. Le servomoteur comporte également une valve trois voies 116 montée dans un passage central 118 du piston pneumatique commandée par une tige de commande 114 liée à une pédale de frein. La valve trois voies comporte un premier siège de clapet d'équilibrage 122 portée par une extrémité arrière d'une douille 120 apte à coulisser dans le passage central 118 du piston pneumatique 108 et une deuxième siège de clapet d'admission 124 porté par une extrémité arrière d'un distributeur-plongeur 126 portant le palpeur et solidaire d'une extrémité avant de la tige de commande du côté du maître-cylindre.

Le servomoteur selon la présente invention comporte également un moyen pour lier la douille au piston pneumatique au delà d'une course C prédéterminée parcourue par le piston pneumatique. Dans l'exemple représenté, lesdits moyens comportent une clé (non représentée) apte à lier axialement le piston pneumatique et la douille 120 au delà d'une course C déterminée. La clé traverse perpendiculairement à l'axe X deux premières lumières diamétralement opposées du piston et deux deuxièmes lumières diamétralement opposées pratiquées dans la douille 120.
La clé est montée fixe dans le piston pneumatique 108.
Dans l'exemple représenté, la clé a sensiblement la forme d'une fourche à deux branches parallèles.
La course C est déterminée par la distance séparant une première face avant de la clé et les premières extrémités longitudinales avant des deuxièmes lumières.

Le servomoteur comporte avantageusement une deuxième clé (non représentée) formant butée axial de retour pour le distributeur et montée parallèlement à la première clé axialement en arrière de celle-ci.

La deuxième clé a sensiblement la forme d'une fourche comportant deux bras parallèles. Les bras de la deuxième clé sont susceptibles de coopérer avec une collerette annulaire en saillie radialement du corps distributeur plongeur en direction de la pédale de frein.

De plus la deuxième clé comporte des extrémités selon un axe perpendiculaire à l'axe X en saillie radialement de la queue de piston et apte à venir en appui contre une portée annulaire 150 de la cheminée 152 de l'enveloppe du servomoteur, définissant ainsi la position repos du piston pneumatique.

Il est bien entendu que l'on pourrait prévoir une seule clé et aménager le corps de piston pneumatique en conséquence.

Nous allons maintenant expliquer le fonctionnement d'un ensemble servomoteur et maître-cylindre selon la présente invention.

Lorsque le conducteur appuie sur la pédale de frein ; la tige de commande est déplacée en direction du maître-cylindre, appliquant l'obturateur contre le siège de clapet d'équilibrage et interrompant la communication entre la chambre basse pression 110 et la chambre à pression variable 112, dans le même temps l'obturateur s'écarte du siège de clapet d'admission autorisant l'entrée de l'air à pression atmosphérique dans la chambre arrière 112. Du fait de l'apparition d'un différentiel de pression entre la chambre avant 110 et la chambre arrière 112, la jupe 106 et le piston pneumatique 108 se déplacent en direction du maître-cylindre indépendamment de la douille 120 qui conserve sa position repos, le piston primaire 5 du maître-cylindre est alors déplacé vers l'avant provoquant une montée de pression dans la chambre de pression ainsi que dans le circuit de freinage. Les courses mortes du maître-cylindre ainsi que celles du circuit hydraulique de freinage sont rattrapées sans déplacement supplémentaire de la tige de commande, les courses mortes sont alors masquées au conducteur. Ensuite, les différentes phases sont les mêmes que précédemment décrites.

Il est bien entendu qu'un maître-cylindre selon la présente invention peut être associé à un servomoteur d'assistance au freinage de type hydraulique ou de type électrique.

Le maître-cylindre et l'ensemble servomoteur d'assistance pneumatique au freinage et maître-cylindre à course morte réduite selon la présente invention s'applique notamment à l'industrie automobile.

Le maître-cylindre et l'ensemble servomoteur d'assistance pneumatique au freinage et maître-cylindre à course morte réduite selon la présente invention s'applique principalement à l'industrie de freinage pour véhicules automobiles notamment véhicules de tourisme.

## Revendications

1. Maître-cylindre pour système de freinage comportant un corps (2) dans lequel est percé un alésage (4) d'axe longitudinal (X), dans lequel est monté à coulissement étanche au moins un piston primaire (5), ledit piston primaire (5) délimitant une chambre d'alimentation et une chambre de travail, ledit piston (5) étant commandé par un tige de commande, ladite chambre étant raccordée aux freins, ledit maître-cylindre comportant également un dispositif de réaction (DA,DA') apte à retransmettre une réaction caractéristique du niveau de freinage à la tige de commande, ledit dispositif de réaction comportant un premier piston de réaction (6) monté à coulissement étanche dans le piston primaire (5) et apte à venir en contact de la tige de commande et un piston de rapport (36) monté à coulissement étanche autour du piston de réaction (6) et dans le piston primaire (5), un premier moyen élastique (50) définissant au moins en partie un seuil de changement de rapport d'assistance
**caractérisé en ce que** ledit dispositif de réaction comporte également une butée (34) liée au piston primaire apte à bloquer l'effort des pistons de réaction hydraulique sur ladite tige de commande.

2. Maître-cylindre selon la revendication 1 **caractérisé en ce que** les dits moyens aptes à créer un saut comportent un deuxième moyen élastique (18) monté en réaction entre le piston primaire (5) et le piston de réaction (6).

3. Maître-cylindre selon la revendication 2 **caractérisé en ce que** le piston de rapport (36) est en appui contre le piston de réaction (6) au repos dans la direction d'actionnement (F) du piston primaire.

4. Maître-cylindre selon la revendication 1 ou 2 **caractérisé en ce que** le piston de rapport (36) est en appui contre une cloison transversale (200) divisant l'alésage (8) en une première et deuxième chambres (202,204), **en ce que** la deuxième chambre (204) est en communication avec la chambre de travail du maître-cylindre, **en ce que** ladite cloison comporte des moyens pour mettre en communication la première et la deuxième chambres (202,204), **en ce que** le piston de rapport (36) est au repos en appui contre ladite cloison (200) et **en ce que** la cloison (200) comporte du côté de la première chambre (202) une cavité de réception (209) de manière étanche de l'extrémité avant (10) du piston de réaction, ladite extrémité (10) du piston de réaction étant apte à coulisser dans ladite cavité (209), de manière à isoler ladite extrémité des variations de pression dans le maître-cylindre.

5. Maître-cylindre selon la revendication précédente **caractérisé en ce que** l'étanchéité de coulissement de la première extrémité avant du piston de réaction (6) est réalisée au moyen d'un joint torique (210) monté dans une gorge pratiqué dans la périphérie du piston de réaction (6).

6. Maître-cylindre selon l'une des revendications 1 à 3 **caractérisé en ce que** le premier moyen élastique (50) est monté en réaction entre le piston de réaction (6) et le piston de rapport (36).

7. Maître-cylindre selon la revendication 6 **caractérisé en ce que** le deuxième moyen élastique (18) est en appui contre le piston de réaction (6) par l'intermédiaire du piston de rapport (36).

8. Maître-cylindre selon la revendication précédente **caractérisé en ce que** le premier (50) et le deuxième (18) moyens élastiques sont respectivement en appui contre le piston de rapport (36) par l'intermédiaire d'une bague (30) montée à coulissement autour du piston de réaction et **en ce que** le premier moyen élastique (50) est disposé à l'intérieur du deuxième moyen élastique (18).

9. Maître-cylindre selon l'une des revendications 1 à 8 **caractérisé en ce que** le piston de rapport (36) vient en appui contre le piston primaire (5) dans le sens opposé au sens d'actionnement du piston primaire (5) lorsque le seuil de changement de rapport a été atteint.

10. Maître-cylindre selon l'une quelconque des revendications précédentes en combinaison avec la revendication 2 **caractérisé en ce que** le premier et le deuxième moyens élastiques sont des ressort à spirales.

11. Ensemble servomoteur d'assistance pneumatique au freinage et maître-cylindre, ledit servomoteur comportant une enveloppe dans laquelle coulisse une jupe (106) solidaire d'un piston pneumatique (108) et délimitant une chambre à basse pression (110) et une chambre à pression variable (112), une valve trois voies montée dans le piston pneumatique et actionnée par une tige commande **caractérisé en ce que** le maître-cylindre est un maître-cylindre selon l'une des revendications précédentes, **en ce que** le piston pneumatique (108) est en appui contre une extrémité arrière du piston primaire (5) et **en ce que** le piston de réaction (6) est apte à venir en contact d'un distributeur-plongeur (126) disposé à une extrémité de la tige de commande lors de la phase de saut.

12. Ensemble selon la revendication précédente **caractérisé en ce que** la valve trois voies comporte une douille (120)montée à coulissement dans un passage central du piston pneumatique, et portant un siège d'équilibrage, un siège d'alimentation étant portée par le distributeur-plongeur (126) et **en ce que** le servomoteur comporte des moyens permettant de solidariser la douille au piston pneumatique au delà d'une course prédéterminée (C).

## Claims

1. Master cylinder for a braking system comprising a body (2) pierced with a bore (4) of longitudinal axis (X) in which there is mounted to slide in a sealed manner at least one primary piston (5), the said primary piston (5) delimiting a supply chamber and a work chamber, the said piston (5) being controlled by a control rod, the said chamber being connected to the brakes, the said master cylinder also comprising a reaction device (DA, DA') able to pass back to the control rod a reaction characteristic of the level of braking, the said reaction device comprising a first reaction piston (6) mounted to slide in a sealed manner in the primary piston (5) and able to come into contact with the control rod and a ratio piston (36) mounted to slide in a sealed manner around the reaction piston (6) and in the primary piston (5), a first elastic means (50) at least partially defining a boost ratio change threshold
**characterized in that** the said reaction device also comprises a stop (34) connected to the primary piston able to block the force of the hydraulic reaction pistons on the said control rod.

2. Master cylinder according to Claim 1, **characterized in that** the said means able to create a jump comprise a second elastic means (18) mounted in reaction between the primary piston (5) and the reaction piston (6).

3. Master cylinder according to Claim 2, **characterized in that** the ratio piston (36) bears against the reaction piston (6) when at rest in the direction of actuation (F) of the primary piston.

4. Master cylinder according to Claim 1 or 2, **characterized in that** the ratio piston (36) bears against a transverse partition (200) dividing the bore (8) into a first and a second chamber (202, 204), **in that** the second chamber (204) is in communication with the work chamber of the master cylinder, **in that** the said partition comprises means for placing the first and second chambers (202, 204) in communication, **in that** the ratio piston (36) when at rest bears against the said partition (200) and **in that** the partition (200) comprises, on the same side as the first chamber (202), a cavity (209) for housing in a sealed manner the front end (10) of the reaction piston, the said end (10) of the reaction piston being able to slide in the said cavity (209) in such a way as to isolate the said end from the variations in pressure in the master cylinder.

5. Master cylinder according to the preceding claim, **characterized in that** the sliding of the first front end of the reaction piston (6) is sealed by means of an o ring seal (210) mounted in a groove made in the periphery of the reaction piston (6).

6. Master cylinder according to one of Claims 1 to 3, **characterized in that** the first elastic means (50) is mounted in reaction between the reaction piston (6) and the ratio piston (36).

7. Master cylinder according to Claim 6, **characterized in that** the second elastic means (18) bears against the reaction piston (6) via the ratio piston (36).

8. Master cylinder according to the preceding claim, **characterized in that** the first (50) and second (18) elastic means bear respectively against the ratio piston (36) via a ring (30) slideably mounted around the reaction piston, and **in that** the first elastic means (50) is positioned inside the second elastic means (18).

9. Master cylinder according to one of Claims 1 to 8, **characterized in that** the ratio piston (36) comes to bear against the primary piston (5) in the opposite direction to the direction of actuation of the primary piston (5) when the ratio change threshold has been reached.

10. Master cylinder according to any one of the preceding claims in combination with Claim 2, **characterized in that** the first and second elastic means are spiral springs.

11. Assembly composed of a pneumatic brake booster and a master cylinder, the said booster comprising a casing in which there slides a skirt (106) secured to a pneumatic piston (108) and delimiting a low-pressure chamber (110) and a variable-pressure chamber (112), a three-way valve mounted in the pneumatic piston and actuated by a control rod, **characterized in that** the master cylinder is a master cylinder according to one of the preceding claims, **in that** the pneumatic piston (108) bears against a rear end of the primary piston (5), and **in that** the reaction piston (6) is able to come into contact with a distributor/plunger (126) positioned at one end of the control rod during the jump phase.

12. Assembly according to the preceding claim, **characterized in that** the three-way valve comprises a bushing (120) slideably mounted in a central passage of the pneumatic piston and bearing an equalizing seat, a supply seat being borne by the distributor/plunger (126), and **in that** the booster comprises means allowing the bushing to move as one with the pneumatic piston for movement beyond a predetermined travel (C).

## Patentansprüche

1. Hauptzylinder für ein Bremssystem, mit einem Körper (2), in dem eine Bohrung (4) mit einer Längsachse (X) ausgebildet ist, in welcher mindestens ein Primärkolben (5) in dichter Weise gleitend angebracht ist, wobei der Primärkolben (5) eine Versorgungskammer und eine Arbeitskammer begrenzt, der Kolben (5) von einer Steuerstange gesteuert wird, die Kammer mit den Bremsen verbunden ist, wobei der Hauptzylinder auch eine Reaktionsvorrichtung (DA, DA') aufweist, die eine für das Bremsniveau charakteristische Reaktion zur Steuerstange weiterleitet, wobei die Reaktionsvorrichtung einen ersten Reaktionskolben (6) aufweist, der im Primärkolben (5) in dichter Weise gleitend angebracht ist und mit der Steuerstange in Kontakt gelangen kann, sowie einen Verhältniskolben (36), der in dichter Weise gleitend um den Reaktionskolben (6) und im Primärkolben (5) angebracht ist, wobei ein erstes elastisches Mittel (50) zumindest teilweise eine Schwelle zur Änderung des Unterstützungsverhältnisses definiert,
**dadurch gekennzeichnet, dass** die Reaktionsvorrichtung auch einen mit dem Primärkolben verbundenen Anschlag (34) aufweist, der die auf die Steuerstange ausgeübte hydraulische Kraft der Reaktionskolben blockieren kann.

2. Hauptzylinder nach Anspruch 1, **dadurch gekennzeichnet, dass** die Mittel, die einen Sprung erzeugen können, ein zweites elastisches Mittel (18) aufweisen, das reagierend zwischen dem Primärkolben (5) und dem Reaktionskolben (6) angebracht ist.

3. Hauptzylinder nach Anspruch 2, **dadurch gekennzeichnet, dass** der Verhältniskolben (36) im Ruhezustand in der Betätigungsrichtung (F) des Primärkolbens am Reaktionskolben (6) anliegt.

4. Hauptzylinder nach Anspruch 1 oder 2, **dadurch gekennzeichnet, dass** der Verhältniskolben (36) an einer querverlaufenden Trennwand (200) anliegt, welche die Bohrung (8) in eine erste und eine zweite Kammer (202, 204) unterteilt, dass die zweite Kammer (204) mit der Arbeitskammer des Hauptzylinders verbunden ist, dass die Trennwand Mittel zur Verbindung der ersten und der zweiten Kammer (202, 204) aufweist, dass der Verhältniskolben (36) im Ruhezustand an der Trennwand (200) anliegt und dass die Trennwand (200) auf der Seite der ersten Kammer (202) eine Vertiefung (209) für die dichte Aufnahme des vorderen Endes (10) des Reaktionskolbens aufweist, wobei das Ende (10) des Reaktionskolbens in der Aufnahme (209) so gleiten kann, dass das Ende gegenüber Druckänderungen im Hauptzylinder isoliert ist.

5. Hauptzylinder nach dem vorhergehenden Anspruch, **dadurch gekennzeichnet, dass** die Dichtigkeit des Gleitens des ersten, vorderen Endes des Reaktionskolbens (6) mittels einer torischen Dichtung (210) realisiert ist, die in einer im Umfang des Reaktionskolbens (6) ausgebildeten Nut angebracht ist.

6. Hauptzylinder nach einem der Ansprüche 1 bis 3, **dadurch gekennzeichnet, dass** das erste elastische Mittel (50) reagierend zwischen dem Reaktionskolben (6) und dem Verhältniskolben (36) angebracht ist.

7. Hauptzylinder nach Anspruch 6, **dadurch gekennzeichnet, dass** das zweite elastische Mittel (18) über den Verhältniskolben (36) am Reaktionskolben (6) anliegt.

8. Hauptzylinder nach dem vorhergehenden Anspruch, **dadurch gekennzeichnet, dass** das erste elastische Mittel (50) und das zweite elastische Mittel (18) jeweils über einen um den Reaktionskolben gleitend angebrachten Ring (30) am Verhältniskolben (36) anliegen und dass das erste elastische Mittel (50) im zweiten elastischen Mittel (18) angeordnet ist.

9. Hauptzylinder nach einem der Ansprüche 1 bis 8, **dadurch gekennzeichnet, dass** der Verhältniskolben (36) in der zur Betätigungsrichtung des Primärkolbens (5) entgegengesetzten Richtung an den Primärkolben (5) in Anlage gelangt, wenn die Schwelle zur Verhältnisänderung erreicht wurde.

10. Hauptzylinder nach einem der vorhergehenden Ansprüche in Kombination mit Anspruch 2, **dadurch gekennzeichnet, dass** das erste und das zweite elastische Mittel Spiralfedern sind.

11. Baugruppe bestehend aus einem pneumatischen Servomotor zur Bremsunterstützung und einem Hauptzylinder, wobei der Servomotor ein Gehäuse aufweist, in dem eine fest mit dem pneumatischen Kolben (108) verbunden Schürze (106) gleitet, die eine Niederdruckkammer (110) und eine Kammer mit variablem Druck (112) begrenzt, und ein Dreiwegeventil, das im pneumatischen Kolben angebracht ist und von einer Steuerstange betätigt wird, **dadurch gekennzeichnet, dass** der Hauptzylinder ein Hauptzylinder nach einem der vorhergehenden Ansprüche ist, dass der pneumatische Kolben (108) an einem hinteren Ende des Primärkolbens (5) anliegt und dass der Reaktionskolben (6) während der Sprungphase mit einem an einem Ende der Steuerstange angeordneten Tauchkolbenverteiler (126) in Kontakt gelangen kann.

12. Baugruppe nach dem vorhergehenden Anspruch, **dadurch gekennzeichnet, dass** das Dreiwegeventil eine Hülse (120) aufweist, die gleitend in einem mittleren Durchgang des pneumatischen Kolbens angebracht ist und einen Ausgleichssitz trägt, wobei ein Versorgungssitz von dem Tauchkolbenverteiler (126) getragen ist, und dass der Servomotor Mittel aufweist, die es ermöglichen, die Hülse jenseits eines vorbestimmten Wegs (C) fest mit dem pneumatischen Kolben zu verbinden.
